# EUROPEAN PATENT SPECIFICATION

(11) **EP 0 979 615 B1**
(45) Date of publication and mention of the grant of the patent: **24.03.2004**
(21) Application number: 98500192.4
(22) Date of filing: 13.08.1998
(51) Int. Cl.: A23L 1/325, A23L 1/33

(54) **Process to obtain a clam substitute**
Verfahren zur Herstellung eines Muschelersatzes
Procédé d'obtention d'un produit de substitution de palourde

(43) Date of publication of application: 16.02.2000
(73) Proprietor: VDA.E HIJOS DE JERONIMO IZAGUIRRE, S.L., 20170 AGINAGA (Gipuzkoa) (ES)
(72) Inventor: Garcia Palacios, Irene, 48395 Sukarrieta (Bizkaia) (ES); Perez Villarreal, Begona, 48395 Sukarrieta (Bizkaia) (ES)
(74) Representative: Esteban Perez-Serrano, Maria Isabel

(56) References cited:
- ES-A- 2 013 965
- US-A- 4 889 742
- PATENT ABSTRACTS OF JAPAN vol. 009, no. 021 (C-263), 29 January 1985 & JP 59 169473 A (SUZUHIRO KAMABOKO KOGYO KK), 25 September 1984
- PATENT ABSTRACTS OF JAPAN vol. 016, no. 473 (C-0991), 2 October 1992 & JP 04 173073 A (OOSAKI SUISAN:KK), 19 June 1992

## Description

### OBJECT OF THE INVENTION

The invention hereby proposed consists of a process to obtain a clam substitute, to be applied in the food industry and which is destined to obtain a product imitating a clam regarding its organoleptic characteristics in shape, structure and consistency (Venerupis sp).

### BACKGROUND OF THE INVENTION

Currently, a number of substitutes of fish or shellfish are commercialized, basically manufactured from surimi, the Japanese term for which the minced, washed and rinsed fish muscle is known as, with a water content similar to the original product, to which different additives are incorporated to assure optimum conservation in the frozen state.

Besides having an excellent stability in the frozen state, its main characteristic is its gel forming capacity, being able to acquire a wide range of textures, according to the thermal treatment applied, a property which has been and is being taken advantage of to prepare different products, such as crab leg, lobster tail, prawn tail, "crab claw", elfin, fresh anchovy steak and mantle of cephalopod substitutes.

In this sense, we may mention Patent PCT No. WO 93/20719 regarding a substitute product of anchovy steak and its production procedure. In this patent, a steak is obtained from minced fish, surimi or a mixture of both, by adding some or several of the following ingredients: water, flavoring, hydro colloids, proteins, different salts, oil, coloring, monosodium glutamate, antioxidants and sugars. After homogenization, the product is shaped by extrusion and/or molding and it is subjected to thermal treatment in one or several stages with different levels of humidity.

Likewise, the Spanish Patent No. 8902607 may be mentioned, regarding the manufacturing process of a substitute for squid muscle and the product so obtained. The process starts with surimi, which is minced, then sodium chloride is added and a mixture homogenized. Then, some or several of the following ingredients are added: starch, water, egg white, vegetal oil or soya protein, then homogenized. The mass obtained is molded and/or extruded, finally subjecting it to a thermal treatment.

In the Spanish Patent No. 9201537, a food product substitute of cephalopod mantle and its manufacturing process is described. Said product consists of 80-95% mantle of pota, which is homogenized with 1-3% by weight of common salt. Then, carrageenates and one or several of the following ingredients are added: calcium salt, potassium salt, starch, egg albumin and soya protein, followed by homogenization. Then, the mass is molded (as rings or open mantle) and, if desired with skin, the mass is treated in a first bath with sodium alginate, followed by another of calcium chloride. The product is subjected to a thermal treatment between 110-250°C for a variable time. It may be battered or not, and frozen or refrigerated.

Patent No. US5254352 regarding fish stakes or substitutes, containing pieces of natural fish destined for gelled surimi paste, describes the process to obtain said products. The fish stakes or substitutes contain pieces of fresh fish (80-90%) and surimi paste (10-20%), in such a way that the paste sticks the pieces together, giving shape to the product. The pieces of fish are cooked, the surimi paste gelled and the product pasteurized.

The applicant ignores, however, any specific process to obtain as from surimi and/or minced fish, a substitute product for clam.

### DESCRIPTION OF THE INVENTION

The invention, purpose of this specification, refers to a process to obtain a food product to substitute fine, slug and/or Japanese clams (Venerupis sp), a mollusc without a differentiated head, whose mantle has a fold on each side of the body, surrounding it and segregating a bivalve shell, consisting of two pieces joined by a ligament. Said substitute consists of a body prepared from surimi and other ingredients, it being possible to present it with or without bivalve shells, of plastic or ceramic.

The process object of the invention, permits a product to be obtained which is characterized in that it has in the gel state a great similarity to natural clam, both in its external appearance (shape, color and appearance) and in flavor, texture and consistency, being prepared as from fish muscle (surimi) and other ingredients like starch, cereal fiber, egg albumin, soya protein, carrageenates, sugar, flavoring and natural colors, whose composition varies, both regarding the ingredients used and their proportion in the overall formulation.

Surimi is one of the basic components in the process to obtain the substitute body for clams, whose content varies between 35-55%, to which salt (NaCl or KCl) is added, with the purpose of solubilizing the miofibrilar proteins at a level of 2-5% over the total mass.

Likewise, the process object of this invention, incorporates cereal fiber at a percentage between 1-6% by weight over the body mass obtained. Said fiber improves the texture, with a reinforcing effect having a high water retention capacity, hence permitting a homogenous distribution thereof and in turn, offering a stabilizing and emulsifying effect, reducing work difficulties.

For the clam substitute to have the texture and aroma typical of clam, it should contain other ingredients like water, starch, sugar, vegetable oil, flavoring and natural colors and other texture modifiers, whose proportion varies according to the quality of the surimi.

To obtain the product object of the invention, the surimi is subjected to mincing at a temperature no greater than 15°C, common salt is added at a level of 2-5% by weight over the total mass and the mixture is homogenized for a variable period of time, according to the surimi used and the temperature evolution of the mass. Homogenization of the mass is performed under vacuum and at a temperature between 0°C and 15°C.

Then, without stopping the mincing process, the remaining ingredients are added in a predetermined order. First, starch is added (0-12%) together with water (25-35%) and hydrated wheat fiber (1-6%). Once the suitable temperature is reached, sugar is added (0-3%) and the texturizing agents (egg albumin between 0-4%, soya protein 0-3% and carrageenates, between 0-5%). Finally, the flavoring agents are added (0.1-0.5%) followed by oil (0.1-3%) and colors (0-0.5%).

Finally, a homogeneous mass is obtained, of a clear color with a temperature between 3-15°C, then being extruded and/or molded to obtain the shape of the natural product.

Then, the product is gelatinized and stabilized, to be submitted to thermal treatment at a temperature of 60-100°C, producing coagulation of the proteins. The stabilization process takes place by means of dry or moist heat, at a temperature between 10-50°C and with a variable duration of 1 to 15 minutes.

The clam body obtained may or may not be incorporated inside plastic or ceramic bivalve shells, which have a small housing to fix the end of the clam body.

Then, independent from their incorporation or not in shells, the final packing is performed and the finished product is subjected to a conservation process, by freezing and/or pasteurization and/or sanitation.

To shape this product, an extruding and/or molding machine is used designed for the purpose pursued and coupled to a continuous line, permitting thermal treatment and packing.

### DESCRIPTION OF THE DRAWINGS

To complement the description being made, and to facilitate an improved and easy understanding of the characteristics of the invention, the present specification is accompanied, as an integral part thereof, by a set of drawings where the following is represented with an illustrative character:

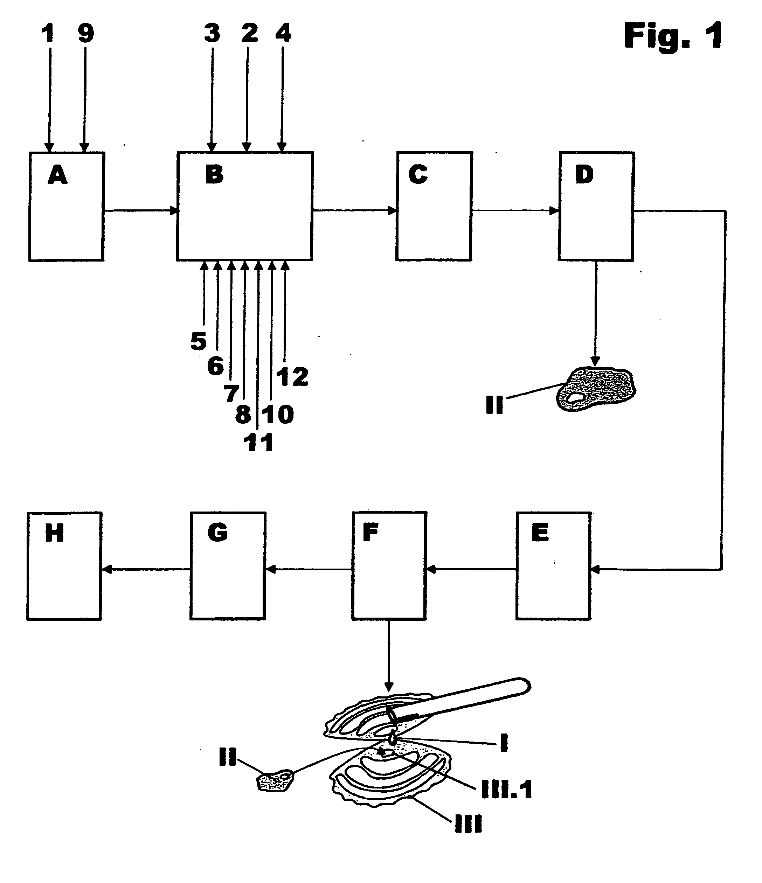

Figure 1 shows a schematic diagram of the process to obtain the invention, indicating in capital letters the consecutive phases thereof, and with numbers the different components of the shellfish substitute used, whilst the Roman numbers represent the clam, the binder and the shell with the housing for the former's base.

### DETAILED DESCRIPTION OF THE INVENTION

In the light of what is described above, this invention refers to a process as disclosed in claim 1.

### A.- Preparation of the Fish Homogenate

The preparation process of the fish homogenate includes a first desuperheated phase of the frozen surimi, until a temperature between -10°C and 0°C, followed by mincing (35 to 55% by weight of the final product) in a vacuum mincer, to which is added 2-5% salt by weight over the total mass. The mincing of these ingredients continues until the mass reaches a temperature between -6°C and 5°C.

### B.- Preparation of the Remaining Ingredients

The cereal fiber is weighed at a proportion of 1-6% over the final mass and is hydrated in water. The water represents 25-35% over the total mass. The starch incorporated in the formulation is present at a proportion of 0-12%.

The remaining ingredients as powders, such as the sugar, egg albumin, soya protein and carrageenates are weighed separately, representing over the total mass 0-3%, 0-4%, 0-5% and 0-5%, respectively. Finally, the flavoring agents are weighed (0.1-0.5%), as well as the oil (0.1-3%) and colors (0-1%).

### C.- Preparation of the Homogeneous Mass

Without stopping the mincing and once the fish homogenate has reached the suitable temperature indicated above, starch, water and hydrated cereal fiber are added, proceeding to the temperature increase of the mass. Then, the remaining ingredients are added: sugar, albumin, soya protein, carrageenates and flavoring agents and colors.

Mincing continues until obtaining a homogeneous mass, whose final temperature should never be less than 15°C.

### D.- Shaping of the Clam Substitute Body.

The shaping of the clam substitute is produced by extruding and/or molding the mass, being fed to the shaping machine thereof.

### E.- Gel Formation and Stabilization.

The bodies already shaped gelify by means of thermal treatment at a temperature of 60-100°C, for a variable time, resulting in the coagulation of the proteins. Gel stabilization is produced by means of dry or moist heat at a temperature between 10-50°C, with a variable duration of 1 to 15 minutes.

### F.- Final Preparation of the Clam Substitute

Once the bodies of the clam substitutes are obtained, this may be incorporated inside the ceramic or plastic bivalve shells, having a small housing permitting the fixing or adhesion of the clam body by means of using an edible binding agent, or by having a small extension of the body itself or, alternatively, by having a greater piece of product with the purpose of locating it like a fastening hinge between the two valves.

Likewise, said bodies may be presented without shells, not requiring a final preparation.

### G.- Packing.

The clam substitute obtained, with or without shell (s) , is introduced into plastic or metallic containers to finally being subjected to a conservation process (freezing and/or pasteurization and/or sanitation).

### H.- Freezing and/or Pasteurization with Refrigerated Storage and/or Sanitation

The already packed product may be conserved in a frozen state, for which it is submitted to a freezing process, by means of a tunnel, reaching a temperature less than -21°C ± 3°C, being stored in a freezing chamber until its dispatch.

Likewise, it may be conserved by pasteurizing and refrigerating, by means of applying a thermal treatment between 65-105°C during a variable time between 20 minutes and 2 hours, with later storage under cooling conditions (3+2°C).

The conservation of the product by means of applying the sanitation treatment involves the product being submitted to temperatures between 105-127°C for a variable time of 20 minutes to 2 hours, finally being stored at room temperature conditions.

### Example 1

### Composition per 100 g product:

- Surimi 55 g
- Water 25 g
- Cereal fiber 3 g
- Salt 2 g
- Starch 11 g
- Egg albumin 3 g
- Sugar 0.7 g
- Oil 1.5 g
- Flavoring agents 0.3 g

The product is manufactured as follows:
- The surimi is desuperheated.
- The surimi is minced together with salt in a cutter for 10 minutes.
- The cereal fiber, water and starch are added and homogenized for 5 minutes.
- The egg albumin and sugar are added and homogenized for 3 minutes.
- The mass is given the shape of a clam by means of extrusion/molding.
- The mass is subjected to a thermal treatment to achieve gel formation and then, stabilized with dry and/or moist air.
- The product is introduced in a plastic container.
- The product is pasteurrized in an autoclave at 80°C for 60 minutes and
- The product is stored in a freezing chamber.

### Example 2

| Composition per 100 g product: | |
|---|---|
| Surimi | 45 g |
| Water | 30 g |
| Cereal fiber | 4 g |
| Salt | 2 g |
| Starch | 10 g |
| Egg albumin | 3 g |
| Carrageenates | 2 g |
| Sugar | 0.7 g |
| Flavoring agents | 0.3 g |

The manufacturing process for the product is the same as that described in the previous example.

## Claims

1. A process to obtain a clam substitute from among those procedures to obtain shellfish substitutes, as from surimi which once minced, washed and rinsed, receives different additives, essentially **characterized by** obtaining a product identical to fine, slug and/or Japanese clam, regarding the organoleptic characteristics, shape, structure and consistency, the clam body (II) being incorporated or not inside plastic or ceramic bivalve shells (III), having a small housing (III.1) to fasten one end of the clam body, as from the following raw materials and contents over percentage final weight: surimi (1), from 35 to 55%; water (2), 25 to 35%; starch (3), 0 to 12%; cereal fiber (4), from 1 to 6%; sugar (5), 0 to 3%; egg albumin (6), 0 to 4%; soya protein (7), 0 to 3%; carrageenates (8), 0 to 5%; salt (9), from 2 to 5%; oil (10), 0.1 to 3%; flavoring additives (11), 0.1-0.5% and natural colors (12), 0-0.5%, according to the following phases:
- Preparation of the fish homogenate (A).
- Preparation of the remaining ingredients (B).
- Preparation of the homogenous mass (C).
- Shaping of the clam substitute body (D).
- Gel formation and stabilization (E).
- Final preparation of the clam substitute (F).
- Packing (G).
- Freezing and/or pasteurization, followed by refrigerated storage and/or sanitation (H).

2. A process to obtain a clam substitute, according to the previous claim, **characterized in that** the preparation of the fish homogenate, whether minced giant squid or surimi or a mixture of both, is carried out in a vacuum mincer.

3. A process to obtain a clam substitute, according to previous claims, **characterized in that** the shaping of the body of the squid substitute is carried out by extrusion and/or molding of the mass.

4. A process to obtain a clam substitute, according to the previous claims, **characterized in that** the bodies of the clam substitutes, once shaped, gelify by means of thermal treatment at 60-100°C during a variable time, producing coagulation of the proteins.

5. A process to obtain a clam substitute, according to the previous claims, **characterized in that** the gel stabilization is produced by means of dry or moist heat, at a temperature between 10-50°C, with a variable duration of 1-15 minutes.

6. A process to obtain clam substitute, according to the previous claims, **characterized by** the use of an edible "binding" agent (I) between the clam (II) and the bivalve shells (III), made of ceramic or plastic material, when the former is incorporated in the housing (III.1) inside the latter.

7. A process to obtain a clam substitute, according to the previous 6th claim, **characterized by** substituting the "binding" agent (1) by an extension of the clam's body itself.

8. A process to obtain a clam substitute, according to the previous 6th claim, **characterized by** substituting the "binding" agent (1) by a greater piece of product, arranged as a fastening hinge between the two valves.

## Patentansprüche

1. Ein Verfahren zur Herstellung von Muschelersatz von den Verfahren, mit denen Schalentierersatz erhalten wird, so wie von Surimi, dass nach dem Zerkleinern, Waschen und Spülen, dem verschiedene Zusätze zugefügt werden, grundlegend **dadurch gekennzeichnet, dass** man ein Produkt erhält, das identisch zu dünnen Nacktschnecken und/oder japanischen Schalentieren ist, was die organoleptischen Eigenschaften, die Form, Struktur und Konsistenz betrifft, wobei sich der Muschelkörper (II) innerhalb von zweischaligen Plastikoder Keramikschalen (III) befindet oder nicht, die über ein kleines Gehäuse (III.1) verfügt, um das eine Ende des Muschelkörpers zu befestigen, bestehend aus den folgenden Rohmaterialien und Inhalten in Prozent je Endgewicht: Surimi (1) zwischen 35 und 55%; Wasser (2) zwischen 25 und 35%, Stärke (3) zwischen 0 und 12%; Getreidefaser (4) zwischen 1 und 6%; Zucker (5) zwischen 0 und 3%; Eiweiss (6) zwischen 0 und 4%, Sojaproteine (7) zwischen 0 und 3%; Carragenate (8) 0 und 5%; Salz (9) zwischen 2 und 5%, Öl (10) zwischen 0,1 und 3%; Geschmackszusätze (11) zwischen 0,1 und 0,5% und natürliche Farbstoffe (12) zwischen 0 und 0,5% gemäss der folgenden Schritte:
- Zubereitung des Fischhomogenats (A).
- Zubereitung der übrigen Zutaten (B).
- Zubereitung der homogenen Masse (C).
- Formgebung des Muschelersatzkörpers (D).
- Gelierung und Stabilisierung (E).
- Endgültige Zubereitung des Muschelersatzes (F).
- Verpacken (G).
- Tieffrieren und/oder Pasteurisieren, gefolgt von der gekühlten Aufbewahrung und/oder Reinigung (H)

2. Ein Verfahren zur Herstellung von Muschelersatz gemäss dem vorangegangenen Anspruch, **dadurch gekennzeichnet, dass** die Zubereitung des Fischhomogenats, sei es zerkleinerter Riesentintenfisch oder Surimi oder eine Mischung aus beidem, in einem Vakuumwolf durchgeführt wird.

3. Ein Verfahren zur Herstellung von Muschelersatz, gemäss den vorangegangenen Ansprüchen, **dadurch gekennzeichnet, dass** die Formgebung des Körpers des Tintenfischersatz durch Extrusion und/oder Modellieren der Masse durchgeführt.

4. Ein Verfahren zur Herstellung von Muschelersatz, gemäss den vorangegangenen Ansprüchen, **dadurch gekennzeichnet, dass** die Körper des Tintenfischersatzes, wenn er geformt ist, durch eine Wärmebehandlung geliert bei einer Temperatur zwischen 60 und 100°C über einen unterschiedlichen Zeitraum, wodurch die Gerinnung der Proteine hervorgerufen wird.

5. Ein Verfahren zur Herstellung von Muschelersatz, gemäss den vorangegangenen Ansprüchen, **dadurch gekennzeichnet, dass** die Gelstabilisierung durch trockene oder feuchte Wärme stattfindet, bei einer Temperatur zwischen 10 und 50°C mit einer unterschiedlichen Dauer zwischen 1 und 15 Minuten.

6. Ein Verfahren zur Herstellung von Muschelersatz, gemäss den vorangegangenen Ansprüchen, **gekennzeichnet durch** die Verwendung eines essbaren "Binde"mittels (I), zwischen der Muschel (II) und den zweischaligen Schalen (III), die aus Keramik- oder Plastikmaterial bestehen, wenn diese in das Gehäuse (III.1) in den Schalen eingefüllt wird.

7. Ein Verfahren zur Herstellung von Muschelersatz, gemäss dem vorangegangenen 6. Anspruch, **dadurch gekennzeichnet, dass** das "Binde"mittel (1) durch eine Verlängerung des eigentlichen Tintenfischkörpers ersetzt wird.

8. Ein Verfahren zur Herstellung von Muschelersatz, gemäss dem vorangegangenen 6. Anspruch, **dadurch gekennzeichnet, dass** das "Binde"mittel (1) durch ein grösseres Stück des Produkts ersetzt wird, dass als Verschliessscharnier zwischen den beiden Schalen angebracht wird.

## Revendications

1. Un procédé pour obtenir un succédané de clovisse à partir des processus pour obtenir des succédanés de coquillage, à partir de surimi qui une fois, haché, lavé et rincé, reçoit différents additifs, **caractérisé** essentiellement par l'obtention d'un produit identique aux excellentes limaces de mer et/ou clovisses japonaises, en ce qui concerne les caractéristiques organoleptiques, la forme, la structure et la consistance, le corps de clovisse (II) étant incorporé ou pas à l'intérieur de coquilles bivalves en plastique ou en céramique (III), en ayant un petit logement (III.1) pour fixer une extrémité du corps de clovisse, à partir des matières premières et des contenus suivants dont le poids final est exprimé en pourcentage: surimi (1), de 35 à 55%; eau (2), de 25 à 35%; amidon (3), de 0 à 12%; fibre de céréales (4), de 1 à 6% ; sucre (5), de 0 à 3%; albumine d'oeuf (6), de 0 a 4%, protéine de soja (7), de 0 à 3%; carraghénates (8), de 0 à 5%; sel (9), de 2 à 5%; huile (10), de 0,1 à 3%; additifs aromatisants (11), de 0,1 à 0,5% et couleurs naturelles (12), de 0 à 0,5%, selon les phases suivantes :
- Préparation de la matière homogénéisée de poisson (A).
- Préparation du reste des ingrédients (B).
- Préparation de la pâte homogène (C).
- Mise en forme du corps de succédané de clovisse (D).
- Gélification et stabilisation du gel (E).
- Préparation finale du succédané de clovisse (F).
- Emballage (G).
- Congélation et/ou pasteurisation, suivi de stockage réfrigéré et/ou d'hygiénisation (H).

2. Un procédé pour obtenir un succédané de clovisse, selon la revendication précédente, **caractérisé en ce que** la préparation de la matière homogénéisée de poisson, celle-ci étant du calmar géant haché ou du surimi ou un mélange des deux, est réalisée dans un hacheur à vide.

3. Un procédé pour obtenir un succédané de clovisse, selon les revendications précédentes, **caractérisé en ce que** la mise en forme du corps du succédané de calmar est réalisée par l'extrusion et ou le moulage de la pâte.

4. Un procédé pour obtenir un succédané de clovisse, selon les revendications précédentes, **caractérisé en ce que** les corps des succédanés de clovisse, une fois mis en forme, ils se gélifient au moyen de traitement thermique à 60-100°C pendant un période de temps variable, en produisant la coagulation des protéines.

5. Un procédé pour obtenir un succédané de clovisse, selon les revendications précédentes, **caractérisé en ce que** la stabilisation du gel se produit au moyen de chaleur sèche ou humide, à des températures allant de 10 à 50°C, pendant une durée variable de 1 à 15 minutes.

6. Un procédé pour obtenir un succédané de clovisse, selon les revendications précédentes, **caractérisé par** l'utilisation d'un agent «liant » (I) comestible entre la clovisse (II) et les coquilles bivalves (III), faites en matière céramique ou plastique, lorsque celle-ci est incorporée dans le logement (III.1) à l'intérieur de ces dernières.

7. Un procédé pour obtenir un succédané de clovisse, selon la revendication 6, **caractérisé par** la substitution de l'agent «liant» (1) par une extension du propre corps de clovisse.

8. Un procédé pour obtenir un succédané de clovisse, selon la revendication 6 précédente, **caractérisé par** la substitution de l'agent «liant» (1) par une plus grande pièce de produit, disposée sous forme de charnière d'attache entre les deux valves.
